# EUROPEAN PATENT SPECIFICATION

(11) **EP 4 188 850 B1**
(45) Date of publication and mention of the grant of the patent: **11.11.2026**
(21) Application number: 21755823.8
(22) Date of filing: 26.07.2021
(51) Int. Cl.: B65G 47/71, B65G 47/84, B65B 29/02, B65B 35/54

(54) **MOVEMENT UNIT FOR ARTICLES**
BEWEGUNGSEINHEIT FÜR ARTIKEL
UNITÉ DE DÉPLACEMENT D'ARTICLES

(30) Priority: 31.07.2020 IT 202000018790
(43) Date of publication of application: 07.06.2023
(73) Proprietor: G.D S.p.A., 40133 Bologna (IT)
(72) Inventor: BIONDI, Andrea, 40133 Bologna (IT); CAVAZZA, Luca, 40133 Bologna (IT); ZANETTI, Umberto, 40133 Bologna (IT); CAMPAGNOLI, Enrico, 40133 Bologna (IT); GIGANTE, Antonio, 40133 Bologna (IT); NOFERINI, Giacomo, 40133 Bologna (IT)
(74) Representative: Susanetto, Carlo
(86) International application number: PCT/IB2021/056706
(87) International publication number: WO 2022/023923

(56) References cited:
- EP-A1- 3 040 285
- DE-A1- 19 935 266
- DE-A1- 2 615 007
- US-A1- 2010 058 716

## Description

The present invention relates to an apparatus for producing capsules for infusion type beverages comprising a movement unit in which the passage of articles between carousel devices is eased. It is also directed to a method for moving articles between carousel devices.

The present invention finds application in the field for preparing and packaging food and non-food products, an example of which is represented by the capsules for infusion type beverages, e.g. coffee, a product to which reference will be made below without loss of generality.

In particular, in this technical field, production and packaging apparatuses are known in which a plurality of containers are individually filled with the product to be packaged, e.g. coffee powder, and then, after being closed by a special membrane, are packaged in special boxes and sent to the final packaging step.

Along this production and packaging apparatus, the containers are moved between subsequent processing units in which they undergo various operations such as the union with a filter that encloses the powder of the infusion type beverage (for example coffee powder), the filling with such powder and the final closure of the container with a membrane.

The containers can be moved between the different processing units by means of transport devices of different type, of which the carousel devices are particularly important due to their widespread use.

DE 19935266 discloses a device and a method for blow forming containers of thermoplastic material, comprising a movement unit between carousel devices according to the prior art.

EP 3040285 discloses an apparatus for producing capsules for infusion type beverages which may represent the closest prior art of the invention. In the apparatus disclosed in EP 3040285 capsules are transported by a pair of conveyor belts to a carousel wherein the capsules are positioned into respective seats and then closed by closing elements.

In this description as well as in the accompanying claims, certain terms and expressions are deemed to have, unless otherwise expressly indicated, the meaning expressed in the following definitions.

The term "article" means any object apt to be moved between subsequent processing units by means of a carousel device.

The articles can be identical to each other, or they can differ from each other in some characteristics such as the formation, the composition or the colour.

"Carousel device" means a transport device for articles, comprising a transporter member, which is moved along a closed path thus defining an advance trajectory for the articles, and a plurality of gripping heads, which are mounted on the transporter member with an ability to move with respect thereto.

The transporter member can be a drum which rotates about a main rotation axis, so as to define a circular advance trajectory, or it can assume different configurations.

The gripping heads are intended to retain the articles as they move along the advance path between a loading zone and an unloading zone of the articles. For this purpose, the gripping heads can be provided with elements specifically provided to individually retain the articles, such as gripping elements of the pincer or suction cup type, or, again, tray-like elements on which respective seats are obtained to receive the articles individually.

The gripping heads are constrained to the transporter member but are limitedly movable with respect thereto. The relative movement of the gripping heads with respect to the transporter member can be of the rotary, translational type or any combination of these movements.

A plurality of articles is moved by a carousel device in a "single-row" configuration when the articles that are moved by the carousel device form only one row during the movement thereof along the advance path of the transporter device.

In other words, all the articles are moved by the carousel device along the same trajectory, which, preferably, is substantially parallel with the advance trajectory of the transporter member, except for the relative movements of the gripping heads.

Similarly, a plurality of articles is moved by a carousel device in a "multiple-row" configuration when the articles that are moved by the carousel device form two or more rows that are staggered from each other during the movement thereof along the advance trajectory of the transporter member.

In this case, therefore, the articles are moved by the carousel device in different groups, with each group of articles following the same trajectory. Preferably, each trajectory followed by the different groups of articles is substantially parallel with the advance trajectory of the transporter member, except for the relative movements of the gripping heads.

The Applicant has preliminarily observed that the carousel devices are particularly suitable in production processes that require continuous processing, in particular with high production capacity.

In particular, the Applicant has verified that these devices can be advantageously provided with suitable processing moving elements which can perform a desired operation on the articles while the latter are retained by the gripping heads and moved along the advance trajectory.

The Applicant has further observed that the transporter member of the carousel devices, also in order to keep the overall dimensions down, is conducted along a closed loop path, which is often circular.

However, the Applicant has found that under certain conditions this shape may involve some drawbacks which can limit the production capacity of the processing unit or potentially damage the articles themselves.

An example of such conditions could be in the case in which the articles being transported on the carousel device were open containers that are filled with a product that, under the action of the centrifugal force, might spill out of the container, such as the containers filled with a liquid or powdered material, such as coffee powder.

The Applicant has, however, observed that such a situation may arise both when the carousel device is used as a simple device for transporting articles and when it is used as a unit for continuous processing of the articles.

In the first case, in fact, a request for greater production capacity generally results in a higher angular speed of the device and, consequently, a greater centrifugal force acting on the articles that are moved by the carousel device.

In the second case, in fact, in order to meet the request for high production capacity and considering that the time for moving the articles on the carousel device substantially depends on the type of processing to be carried out and is therefore in some way predefined, the carousel device is provided with a large number of processing moving elements which are arranged next to each other.

In order to allow more moving elements to be installed on the carousel device, however, the Applicant has noted that the diameter of the transporter member is generally increased, resulting in an increase in the centrifugal force acting on the articles being processed.

On the basis of these observations, the Applicant has first established that the production capacity of a carousel device can be increased without increasing the centrifugal force acting on the articles, by arranging the articles in a multiple-row configuration, for example by moving them on more rows substantially parallel with the advance trajectory of the transporter member.

For example, the Applicant has verified that in a carousel device with a circular trajectory, the articles may be picked up in groups of two or more articles from the gripping heads and then rotated so as to align this group of articles to a radial direction, forming a plurality of two or more rows of articles that are moved along respective substantially circular and concentric trajectories.

However, the Applicant has observed that the passage of articles between carousel devices, and in particular the passage from a carousel device in which the articles are moved in a single-row configuration to a carousel device in which the articles are moved in a multiple-row configuration, may be particularly burdensome in terms of providing the driving equipment of the respective gripping heads of the carousel devices and be potentially critical for the proper handling of articles between the gripping devices.

Moreover, the Applicant has verified that this criticality increases in the event that the transport speed of the articles is particularly high, due to the reduction in the cycle times and, consequently, the reduction in the time in which the article must be transferred from one carousel device to another.

However, the Applicant has perceived that the passage of the articles between the carousel devices could be significantly eased by providing that the articles were only exchanged between respective gripping heads of the carousel devices.

In other words, the gripping head of the downstream carousel device, which is intended to move the articles into the multi-row configuration, receives the articles from a single gripping head of the upstream carousel device, thus allowing the exchange to be managed in a single operation.

Finally, the Applicant has found that a movement unit for articles comprising a first carousel device provided with a plurality of first gripping heads which are mounted with an ability to move on a respective first transporter member and provided to move articles into a single-row configuration, and a second carousel device provided with a plurality of second gripping heads which are mounted with an ability to move on a respective second transporter member and provided to move the articles into a multiple-row configuration, wherein the articles are brought to each second gripping head by a single first gripping head, is capable of operating at high speeds with precise and effective driving equipment, while ensuring a correct handling of the articles, in particular in the exchange step.

Thus, in a first aspect thereof, the present invention is directed to an apparatus for producing capsules for infusion type beverages, comprising at least one movement unit for capsules, according to claim 1.

In a second aspect thereof, the present invention is directed to a method for moving articles between carousel devices according to claim 11.

Thanks to these features, the production apparatus is particularly suitable for moving and processing capsules for infusion type beverages, especially capsules containing coffee powder that have not yet been closed, with high production capacities.

In particular, the movement unit of the apparatus of the present invention is capable of transferring articles between carousel devices even at high speeds, and, at the same time, allowing the articles to be transported from a single-row configuration to a multiple-row configuration without over-complicating the driving equipment of the gripping heads of the respective carousel devices.

In at least one of the aforesaid aspects, the present invention may also have at least one of the preferred features set out below.

Preferably, each of said first gripping heads is provided to selectively retain a number of articles equal to the number of articles delivered to each of said second gripping heads.

In this way, the exchange between a first gripping head and a second gripping head is completed, without any articles remaining on the first gripping head.

Preferably, said articles are passed two by two from each first gripping head to a respective second gripping head.

Preferably, in said first carousel device said articles are aligned substantially parallel with said first advance trajectory.

In some embodiments, said second gripping heads are moved on said second transporter member so as to define on said second carousel device a number of rows of articles equal to the number of articles received from each second gripping head.

In this way, the number of articles accommodated in each second gripping head is equal to the number of rows on which the articles will be arranged in the second carousel device, so that the arrangement of the articles in multiple rows can be achieved by a simple movement, for example a rotation, of the second gripping heads with respect to the second transporter member.

Preferably, said second gripping heads are moved on said second transporter member in such a manner that, over at least a portion of said second carousel device, each row of said plurality of rows is substantially parallel with said second advance trajectory.

In some embodiments, said first transporter member comprises a drum which rotates about a first main rotation axis and said first advance trajectory defines a circumference.

Preferably, said first main rotation axis is substantially vertical.

In some embodiments, said second first transporter member comprises a drum which rotates about a second main rotation axis and said second advance trajectory defines a circumference.

Preferably, said second main rotation axis is substantially vertical.

In this way, the carousel devices are more easily manageable both in the movement of the transporter member and in the movement of the respective gripping heads.

In some embodiments, each first gripping head comprises a plurality of gripping elements, each of which is provided to retain one of said articles individually.

In this way, the first carousel device is facilitated in taking care of the single articles and the controlled passage thereof to the second gripping heads of the second carousel device is ensured.

Preferably, said gripping elements are of the pincer type.

Preferably, said gripping elements comprise a central arm which is mounted so as to be fixed to said first gripping head and a pair of lateral arms.

Preferably, said lateral arms are mounted on said first gripping head at the opposite side with respect to said central arm and are articulated so as to pivot away from and towards said central arm in order to retain or release said articles.

In this way, a pincer gripping element is obtained with a particularly simple and effective mechanical construction capable of gripping two articles at a time and keeping them at a correct spacing relative to each other.

In other embodiments, said gripping elements are of the suction cup type, connected to a pressure reduction circuit in order to retain the articles by suction.

In some embodiments, said second gripping heads comprise a tray-like element in which a plurality of seats are formed.

Preferably, each seat is provided to receive a single article from said first gripping head in a supporting manner.

In this way, each article is individually picked up by the second gripping heads and, moreover, by retaining the articles at the bottom in a supporting manner, a gentle handling thereof is guaranteed and any operations on the articles that require free access to the top thereof, such as in the case of filling containers with a product, whether liquid or powder, are allowed.

Furthermore, the provision of a tray-like element allows the articles to be received from the first gripping heads in a comfortable, simple manner, avoiding possible mechanical interference, both in the case where the first gripping heads are provided with pincer gripping elements, which typically retain the articles by gripping them laterally at the sides, and in the case where they are provided with suction cup gripping elements, which typically retain the articles from the top.

In some embodiments, said second carousel device comprises a driving equipment of said second gripping heads which is provided to pivot each second gripping head about a pivot axis in order to move said articles into said configuration with multiple rows.

In this way, the articles can be brought into a multi-row configuration with a simple rotation movement.

Preferably, said pivot axis is spaced apart from a straight line which joins said seats of said tray-like element.

In this way, the tray-like element can be moved with respect to the transporter member for greater movements, so that it can be conveniently brought at any moving elements for processing articles, for example at a container filling dispenser.

In a preferred embodiment, said articles are moved from said first carousel device to said second carousel device at a speed greater than 500, more preferably greater than 1000 articles per minute, even more preferably exceeding 1200 articles per minute.

According to the invention, said articles are capsules for infusion type beverages, e.g. coffee.

In one embodiment, said movement unit transports empty capsules from said first carousel device to said second carousel device and, preferably, said second carousel device comprises at least one device for filling said empty capsules with a powdered product.

Preferably, said at least one filling device is mounted on said second transporter member so as to fill said empty capsules during the movement of said second transporter member along said second advance trajectory.

The characteristics and advantages of the invention will become clearer from the detailed description of an embodiment example illustrated, by way of non-limiting example, with reference to the appended drawings wherein:
- Figure 1 is a schematic plan view from above of a movement unit for articles comprised in an apparatus for producing capsules for infusion type beverages constructed in accordance with the present invention;
- Figure 2 is a schematic front view of the movement unit in Figure 1,
- Figure 3 is a schematic plan view from above of a detail on an enlarged scale of the movement unit in Figure 1,
- Figures 4 and 5 are schematic plan views from above of a detail on an enlarged scale of the movement unit in Figure 1 in subsequent operating positions,
- Figure 6 is a schematic plan view from above of an apparatus for producing capsules for infusion type beverages comprising the movement unit for articles of Figure 1.

With reference to the accompanying figures, 1 indicates overall a movement unit for articles 2 inserted within an apparatus 100 for producing capsules for infusion type beverages, in particular coffee, constructed in accordance with the present invention.

The apparatus 100 is provided to continuously move a plurality of empty capsules, prior to the filling thereof with coffee powder.

In this embodiment example, therefore, the articles 2 are thus formed by capsules, also indicated below with the same numerical reference.

In general terms, the apparatus 100 comprises a first unit 101 in which the empty capsules 2 are fed, a second unit 102 in which the empty capsules 2 are coupled to a filter, a third unit 103, comprising the movement unit 1, in which the empty capsules 2 provided with a filter are filled with coffee powder, as well as a fourth unit 104 in which the coffee-filled capsules 2 are closed by a membrane.

The capsules 2 are formed by a rigid casing, with a truncated conical shape, comprising a bottom 4 from which a flared lateral wall 3 extends towards an opening 5 opposite the bottom 4. The bottom 4 has a smaller cross-section than the mouth 5 and, overall, the capsules have a diameter of between 20 and 60 mm and a height of between 15 and 60 mm.

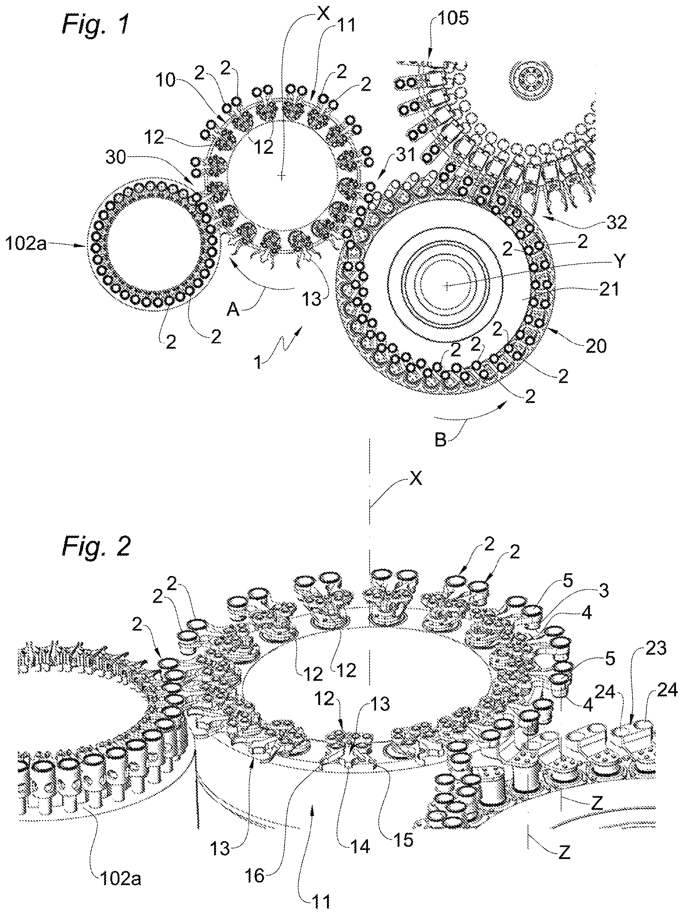

The movement unit 1, in the most general components thereof, comprises a first carousel device 10, configured to transport the capsules 2 into a single-row configuration, and a second carousel device 20, which is provided to receive the capsules 2 from the first carousel device 10 and to transport them towards the subsequent processing unit in an arrangement with multiple rows, in particular a double row, as clearly visible in Figure 1.

The first carousel device 10 comprises a first transporter member 11 on which the first gripping heads 12 are mounted with an ability to move.

The first transporter member 11 comprises a drum which is driven in rotation about a first main rotation axis X, which extends along a substantially vertical direction, so as to define a first advance trajectory A of the first transporter member 11, which is substantially circular.

The first gripping heads 12 are mounted uniformly on an upper surface of the drum, at a radially outer circumferential region of the drum.

Preferably, the first gripping heads 12 are limitedly movable with respect to the first transporter member 11, and, in particular, they can be pivoted about a substantially vertical axis thereof, parallel with the first main rotation axis X.

Each first gripping head 12 comprises a pair of gripping elements 13, each of which is provided to individually retain a capsule 2.

In particular, the gripping elements 13 are of the pincer type and comprise a central arm 14, which is mounted so as to be fixed to the first gripping head 12, and a pair of lateral arms 15 and 16, which are mounted on the first gripping head 12 at the opposite side with respect to the central arm 14 and are articulated so as to pivot away from and towards the central arm 14 in order to retain or release the capsules 2.

The second carousel device 20 comprises a second transporter member 21 on which the second gripping heads 22 are mounted with an ability to move.

The second transporter member 21 comprises a drum which is driven in rotation about a second main rotation axis Y, which extends along a substantially vertical direction, so as to define a second advance trajectory B of the second transporter member 21, which is substantially circular.

The second gripping heads 22 are mounted uniformly on an upper surface of the drum, at a radially outer circumferential region of the drum.

Each second gripping head 22 further comprises a tray-like element 23, in which a pair of seats 24 is formed, each provided to receive a single capsule 2 from a first gripping head 12 in a supporting manner.

The second gripping heads 22 are limitedly movable with respect to the second transporter member 21, and, in particular, the second carousel device 20 comprises a driving equipment of the second gripping heads 22 which is provided to pivot each of them about a substantially vertical pivot axis Z, parallel with the second main rotation axis Y.

Preferably, the pivot axis Z is spaced apart from a straight line R which joins the seats 24 of the tray-like element 23.

A filling device (not shown in the accompanying Figures) is also mounted on the second carousel device 20, which is provided to fill the capsules 2 with coffee powder while they are moved along the second advance trajectory B.

The movement unit 1 operates as follows.

The first carousel device 10 removes the capsules 2 from a wheel 102a of the second unit 102 of the apparatus 110, in which the capsules are joined to a filter.

In particular, the first carousel device 10 removes the capsules 2 at a removal zone 30, in which the first advance trajectory A approaches or overlaps the trajectory of the wheel 102a.

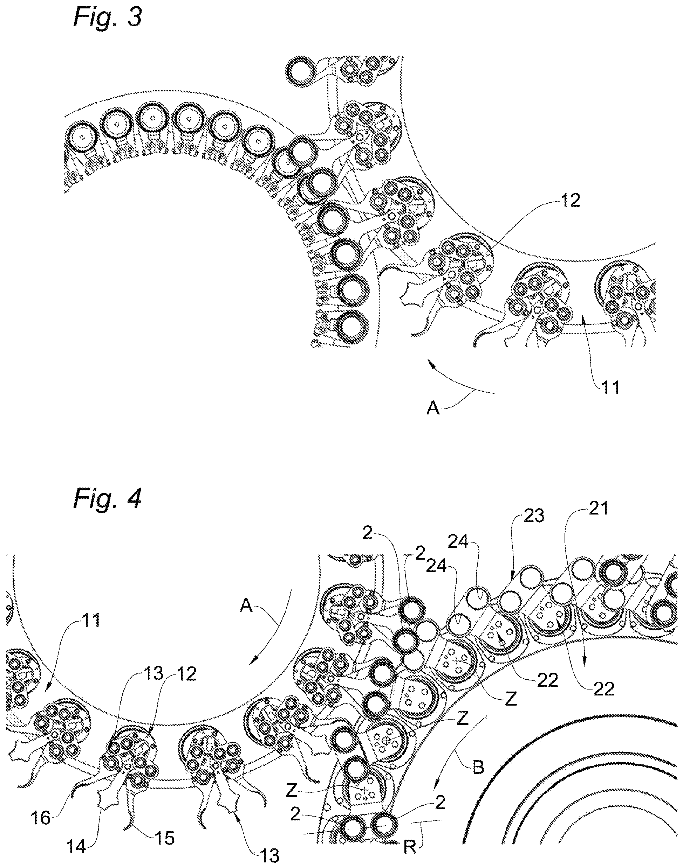

At the removal zone 30, the first gripping heads 12 are rotated with respect to the transporter member 11 about their respective pivot axes, so as to bring the gripping elements 13 close to the capsules 2 and keep them facing them for a sufficient portion to allow the lateral arms 15 and 16 to approach the central arm 14 and to close around the capsules 2 to be removed (Figure 3).

After the removal, the capsules 2 are moved in pairs from the first gripping heads 12 towards an exchange zone 31, defined in a proximity region of the first transporter member 11 and of the second transporter member 21, where they are delivered from the first carousel device 10 to the second carousel device 20.

During the movement between the removal zone 30 and the exchange zone 31, the position of the first gripping heads 12 is maintained in such a manner that the capsules 2 moved by the first transporter 11 assume a single-row configuration, substantially circular, parallel with the first advance trajectory A.

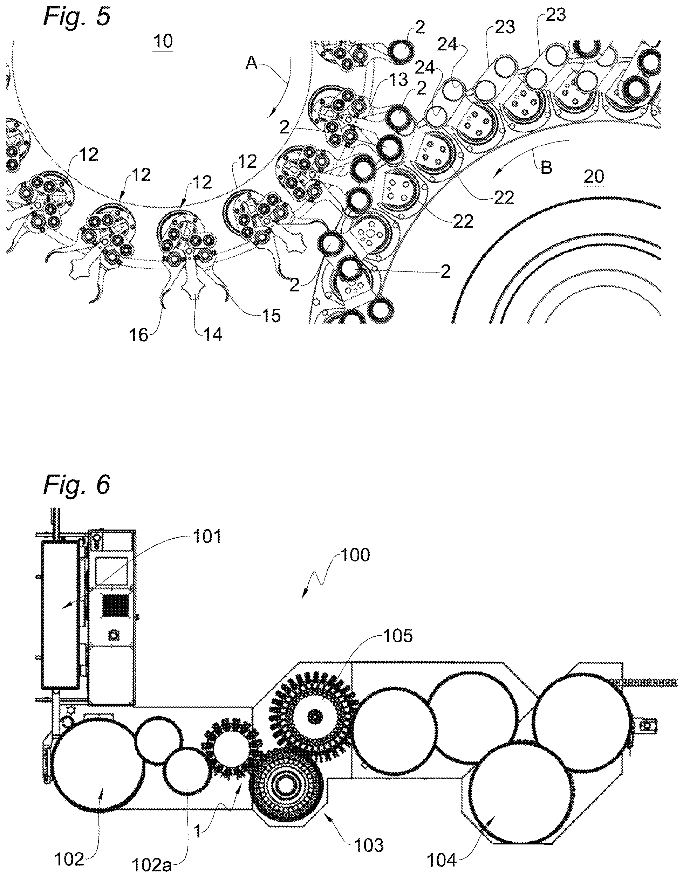

At the exchange zone 31, the first gripping heads 12 and the second gripping heads 22 are pivoted about their respective pivot axes in such a manner that the tray-like elements 23 are positioned under the capsules 2 transported by the gripping elements 13 so as to be able to receive them in the seats 24 and allow the immediate disengagement of the gripping elements 13 which is carried out by moving the lateral arms 15 and 16 away from the central arm 14 (better visible in Figures 4 and 5).

In particular, as better visible in Figure 2, the second gripping heads 22 while they are pivoting about the pivot axis Z, are also moved upwards, along the direction defined by such axis, so as to engage the bottom 4 of the capsules 2 in the seats 24. Each pair of capsules 2 thus passes simultaneously from a first gripping head 12 to a second gripping head 22.

The passage of the capsules 2 from the first carousel device 10 to the second carousel device 20 therefore takes place by successive passages of pairs of capsules 2 from a first gripping head 12 to a respective second gripping head 22.

As the capsules 2 are released from the gripping elements 13, the second gripping heads 22 are again lowered and rotated about the pivot axis Z to move the capsules 2 into a configuration with multiple rows, in this case a double row.

During the movement of the second transporter member 21 along the second trajectory B, the capsules 2 carried by the second gripping heads 22 are filled with coffee powder thanks to the action of the filling device provided on the second carousel device 20.

In the final portion of the movement of the second transporter member 21 along the second trajectory B, the capsules 2 are finally moved by the second gripping heads 22 in such a manner that each pair of capsules carried by a second gripping head is aligned according to a radial direction of the transporter member 21. In this way, on the final segment of the second carousel device 20, two rows of capsules 2 remain defined substantially parallel with the second advance trajectory B (better visible in Figure 1).

The pairs of capsules 2 are then delivered by the second carousel device 20 to a subsequent transport device, for example an exchange wheel 105 at a release zone 32.

Thanks to the features of the present invention, it is therefore possible to transfer the capsules 2 between the first carousel device 10, where they are arranged in a single-row configuration, and the second carousel device 20, where they are arranged in a multiple-row configuration, effectively and safely even at high production speeds, in particular even at speeds of about 1500 articles per minute.

It goes without saying that a person skilled in the art may, in order to meet specific and contingent application requirements, make further modifications and variants of the above-described invention within the scope of protection as defined by the following claims.

## Claims

1. An apparatus (100) for producing capsules (2) for infusion type beverages, comprising at least one movement unit (1) for said capsules, said at least one movement unit (1) comprising
a first carousel device (10) comprising a first transporter member (11) which can be moved along a first advance trajectory (A), the apparatus being **characterized in that** the first carousel device (10) comprises a plurality of first gripping heads (12) which are mounted with an ability to move on said first transporter member (11), said first gripping heads (12) being provided to move said capsules (2) into a single-row configuration, in which said capsules are aligned in a single row during the movement thereof along said first advance trajectory (A),
wherein the movement unit (1) further comprises a second carousel device (20) which comprises a second transporter member (21) which is movable along a second advance trajectory (B) and a plurality of second gripping heads (22) which are mounted with an ability to move on said second transporter member (21), each second gripping head (22) being provided to receive said capsules (2) from said first carousel device (10) and to move them into a multiple-row configuration, in which said capsules (2) are aligned in a plurality of rows which are staggered relative to each other during the movement thereof along said second advance trajectory (B),
wherein each second gripping head (22) receives said capsules (2) from a respective first gripping head (12).

2. An apparatus according to claim 1, wherein said second gripping heads (22) are moved on said second transporter member (21) so as to define on said second carousel device (20) a number of rows of articles equal to the number of capsules received from each second gripping head (22).

3. An apparatus according to claim 2, wherein said second gripping heads (22) are moved on said second transporter member (21) in such a manner that, over at least a portion of said second carousel device (20), each row of said plurality of rows is substantially parallel with said second advance trajectory (B).

4. An apparatus according to any one of the preceding claims, wherein said first transporter member (11) comprises a drum which rotates about a first main rotation axis (X), preferably substantially vertical, and said first advance trajectory (A) defines a circumference.

5. An apparatus according to any one of the preceding claims, wherein said second transporter member (21) comprises a drum which rotates about a second main rotation axis (Y), preferably substantially vertical, and said second advance trajectory (B) defines a circumference.

6. An apparatus according to any one of the preceding claims, wherein each first gripping head (12) comprises a plurality of gripping elements (13), each of which is provided to individually retain one of said capsules (2).

7. An apparatus according to claim 6, wherein said gripping elements (13) comprise a central arm (14) which is mounted so as to be fixed to said first gripping head (12) and a pair of lateral arms (15, 16), said lateral arms (15, 16) being mounted on said first gripping head (12) at the opposite side with respect to said central arm (14) and being articulated so as to pivot away from and towards said central arm in order to retain or release said capsules (2).

8. An apparatus according to any one of the preceding claims, wherein said second gripping heads (22) comprise a tray-like element (23), in which a plurality of seats (24) are formed, each seat (24) being provided to receive a single capsule (2) from said first gripping head (12) in a supporting manner.

9. An apparatus according to any one of the preceding claims, wherein said second carousel device (20) comprises a driving equipment of said second gripping heads (22) which is provided to pivot each second gripping head (22) about a pivot axis (Z) in order to move said capsules (2) into said configuration with multiple rows.

10. An apparatus according to claim 9, wherein said pivot axis (Z) is spaced apart from a straight line (R) which joins said seats (24) of said tray-like element (23).

11. A method for moving articles (2) between carousel devices of an apparatus for producing capsules (2) for infusion type beverages according to any one of the preceding claims, the method comprising:
- providing a first carousel device (10) comprising a first transporter member (11) which is movable along a first advance trajectory (A) and a plurality of first gripping heads (12) which are mounted with an ability to move on said first transporter member (11),
- providing a second carousel device (20) comprising a second transporter member (21) which is movable along a second advance trajectory (B) and a plurality of second gripping heads (22) which are mounted with an ability to move on said second transporter member (21),
- moving, by means of said first carousel device (10), said capsules (2) which are retained by said first gripping heads (12) into a configuration with a single row, in which said capsules are aligned in a single row during the movement thereof along said first advance trajectory (A),
- transferring said capsules (2) from said first carousel device (10) to said second carousel device (20) by means of passing the capsules (2) from each first gripping head (12) to a respective second gripping head (22),
- moving, by means of said second carousel device (20), said capsules (2) received from said first gripping heads (12) into a configuration with multiple rows, in which said capsules (2) are aligned in a plurality of rows which are staggered relative to each other during the movement thereof along said second advance trajectory (B).

12. Method according to claim 11, wherein said capsules (2) are passed two by two from each first gripping head (12) to a respective second gripping head (22).

13. An apparatus according to any one of claims 1 to 10, wherein said movement unit (1) transports empty capsules (2) from said first carousel device (10) to said second carousel device (20) and said second carousel device (20) comprises at least one device for filling said empty capsules with a powdered product.

14. An apparatus according to claim 13, wherein said at least one filling device is mounted on said second transporter member (21) so as to fill said empty capsules (2) during the movement of said second transporter member (21) along said second advance trajectory (B).

## Patentansprüche

1. Vorrichtung (100) zur Herstellung von Kapseln (2) für Aufgussgetränke, mit zumindest einer Bewegungseinheit (1) für die Kapseln, wobei die zumindest eine Bewegungseinheit (1) eine erste Karussellvorrichtung (10) mit einem ersten Transportelement (11) aufweist, das entlang einer ersten Vorschubbahn (A) bewegbar ist, wobei die Vorrichtung **dadurch gekennzeichnet ist, dass** die erste Karussellvorrichtung (10) aufweist:
- eine Mehrzahl von ersten Greifköpfen (12), die beweglich am ersten Transportelement (11) montiert sind, wobei die ersten Greifköpfe (12) vorgesehen sind, um die Kapseln (2) in eine einreihige Anordnung zu bewegen, in der die Kapseln während ihrer Bewegung entlang der ersten Vorschubbahn (A) in einer einzigen Reihe ausgerichtet sind,
wobei die Bewegungseinheit (1) ferner aufweist:
- eine zweite Karussellvorrichtung (20), die ein zweites Transportelement (21), das entlang einer zweiten Vorschubbahn (B) bewegbar ist, und eine Mehrzahl von zweiten Greifköpfen (22) aufweist, die beweglich am zweiten Transportelement (21) montiert sind, wobei jeder zweite Greifkopf (22) vorgesehen ist, um die Kapseln (2) von der ersten Karussellvorrichtung (10) aufzunehmen und in eine mehrreihige Anordnung zu bewegen, in der die Kapseln (2) in einer Mehrzahl von Reihen ausgerichtet sind, die während ihrer Bewegung entlang der zweiten Vorschubbahn (B) relativ zueinander versetzt sind,
- wobei jeder zweite Greifkopf (22) die Kapseln (2) von einem jeweiligen ersten Greifkopf (12) aufnimmt.

2. Vorrichtung nach Anspruch 1, wobei die zweiten Greifköpfe (22) auf dem zweiten Transportelement (21) bewegt werden, um auf der zweiten Karussellvorrichtung (20) eine Anzahl von Artikelreihen zu bilden, die der Anzahl der von jedem zweiten Greifkopf (22) aufgenommenen Kapseln entspricht.

3. Vorrichtung nach Anspruch 2, wobei die zweiten Greifköpfe (22) auf dem zweiten Transportelement (21) derart bewegt werden, dass über zumindest einen Abschnitt der zweiten Karussellvorrichtung (20) jede der Mehrzahl von Reihen im Wesentlichen parallel zur zweiten Vorschubbahn (B) verläuft.

4. Vorrichtung nach einem der vorhergehenden Ansprüche, wobei das erste Transportelement (11) eine Trommel umfasst, die sich um eine erste, vorzugsweise im Wesentlichen vertikale Hauptdrehachse (X) dreht, und die erste Vorschubbahn (A) eine Kreislinie bildet.

5. Vorrichtung nach einem der vorhergehenden Ansprüche, wobei das zweite Transportelement (21) eine Trommel aufweist, die sich um eine zweite, vorzugsweise im Wesentlichen vertikale Hauptdrehachse (Y) dreht, und die zweite Vorschubbahn (B) eine Kreislinie bildet.

6. Vorrichtung nach einem der vorhergehenden Ansprüche, wobei jeder erste Greifkopf (12) eine Mehrzahl von Greifelementen (13) aufweist, von denen jedes vorgesehen ist, um eine der Kapseln (2) einzeln zu halten.

7. Vorrichtung nach Anspruch 6, wobei die Greifelemente (13) einen zentralen Arm (14), der montiert ist, um am ersten Greifkopf (12) fixiert zu werden, und ein Paar seitlicher Arme (15, 16) aufweisen, wobei die seitlichen Arme (15, 16) am ersten Greifkopf (12) auf der dem zentralen Arm (14) gegenüberliegenden Seite montiert und gelenkig gelagert sind, um vom zentralen Arm weg und in Richtung des zentralen Arms zu schwenken, um die Kapseln (2) zu halten oder freizugeben.

8. Vorrichtung nach einem der vorhergehenden Ansprüche, wobei die zweiten Greifköpfe (22) ein schalenartiges Element (23) aufweisen, in dem eine Mehrzahl von Aufnahmen (24) ausgebildet sind, wobei jede Aufnahme (24) vorgesehen ist, um eine einzelne Kapsel (2) vom ersten Greifkopf (12) abstützend aufzunehmen.

9. Vorrichtung nach einem der vorhergehenden Ansprüche, wobei die zweite Karussellvorrichtung (20) eine Antriebseinrichtung der zweiten Greifköpfe (22) aufweist, die vorgesehen ist, um jeden zweiten Greifkopf (22) um eine Schwenkachse (Z) zu schwenken, um die Kapseln (2) in die Anordnung mit mehreren Reihen zu bewegen.

10. Vorrichtung nach Anspruch 9, wobei die Schwenkachse (Z) von einer Geraden (R) beabstandet ist, die die Aufnahmen (24) des schalenartigen Elements (23) verbindet.

11. Verfahren zum Bewegen von Artikeln (2) zwischen Karussellvorrichtungen einer Vorrichtung zur Herstellung von Kapseln (2) für Aufgussgetränke nach einem der vorhergehenden Ansprüche, wobei das Verfahren aufweist:
- Vorsehen einer ersten Karussellvorrichtung (10), die ein erstes Transportelement (11), das entlang einer ersten Vorschubbahn (A) bewegbar ist, und eine Mehrzahl von ersten Greifköpfen (12) aufweist, die beweglich am ersten Transportelement (11) montiert sind,
- Vorsehen einer zweiten Karussellvorrichtung (20), die ein zweites Transportelement (21), das entlang einer zweiten Vorschubbahn (B) bewegbar ist, und eine Mehrzahl von zweiten Greifköpfen (22) aufweist, die beweglich am zweiten Transportelement (21) montiert sind,
- Bewegen der von den ersten Greifköpfen (12) gehaltenen Kapseln (2) mittels der ersten Karussellvorrichtung (10) in eine Anordnung mit einer einzigen Reihe, in der die Kapseln während ihrer Bewegung entlang der ersten Vorschubbahn (A) in einer einzigen Reihe ausgerichtet sind,
- Übertragen der Kapseln (2) von der ersten Karussellvorrichtung (10) zur zweiten Karussellvorrichtung (20) durch Weiterleiten der Kapseln (2) von jedem ersten Greifkopf (12) an einen jeweiligen zweiten Greifkopf (22),
- Bewegen der von den ersten Greifköpfen (12) aufgenommenen Kapseln (2) durch die zweite Karussellvorrichtung (20) in eine mehrreihige Anordnung, in der die Kapseln (2) in einer Mehrzahl von Reihen ausgerichtet sind, die während ihrer Bewegung entlang der zweiten Vorschubbahn (B) relativ zueinander versetzt sind.

12. Verfahren nach Anspruch 11, wobei die Kapseln (2) paarweise von jedem ersten Greifkopf (12) an einen jeweiligen zweiten Greifkopf (22) weitergeleitet werden.

13. Vorrichtung nach einem der Ansprüche 1 bis 10, wobei die Bewegungseinheit (1) leere Kapseln (2) von der ersten Karussellvorrichtung (10) zur zweiten Karussellvorrichtung (20) transportiert und die zweite Karussellvorrichtung (20) zumindest eine Vorrichtung zum Befüllen der leeren Kapseln mit einem pulverförmigen Produkt aufweist.

14. Vorrichtung nach Anspruch 13, wobei die zumindest eine Füllvorrichtung am zweiten Transportelement (21) montiert ist, um die leeren Kapseln (2) während der Bewegung des zweiten Transportelements (21) entlang der zweiten Vorschubbahn (B) zu befüllen.

## Revendications

1. Appareil (100) destiné à la fabrication de capsules (2) pour boissons de type infusion, comprenant au moins une unité de déplacement (1) pour lesdites capsules, ladite au moins une unité de déplacement (1) comprenant un premier dispositif à carrousel (10) comportant un premier élément de transport (11) qui peut être déplacé le long d'une première trajectoire d'avance (A), l'appareil étant **caractérisé en ce que** le premier dispositif à carrousel (10) comprend une pluralité de premières têtes de préhension (12) qui sont montées avec une capacité à se déplacer sur ledit premier élément de transport (11), lesdites premières têtes de préhension (12) étant prévues pour déplacer lesdites capsules (2) selon une configuration à rangée unique, dans laquelle lesdites capsules sont alignées en une unique rangée au cours de leur déplacement le long de ladite première trajectoire d'avance (A), dans lequel l'unité de déplacement (1) comprend en outre un deuxième dispositif à carrousel (20) qui comprend un deuxième élément de transport (21) qui est mobile le long d'une deuxième trajectoire d'avance (B) et une pluralité de deuxièmes têtes de préhension (22) qui sont montées avec une capacité à se déplacer sur ledit deuxième élément de transport (21), chaque deuxième tête de préhension (22) étant prévue pour recevoir lesdites capsules (2) provenant dudit premier dispositif à carrousel (10) et à les déplacer en une configuration à plusieurs rangées, dans laquelle lesdites capsules (2) sont alignées en une pluralité de rangées qui sont décalées les unes par rapport aux autres au cours de leur déplacement le long de ladite deuxième trajectoire d'avance (B), dans lequel chaque deuxième tête de préhension (22) reçoit lesdites capsules (2) à partir d'une première tête de préhension respective (12).

2. Appareil selon la revendication 1, dans lequel lesdites deuxièmes têtes de préhension (22) sont déplacées sur ledit deuxième élément de transport (21) de manière à définir, sur ledit deuxième dispositif à carrousel (20), un nombre de rangées d'articles égal au nombre de capsules reçues à partir de chaque deuxième tête de préhension (22).

3. Appareil selon la revendication 2, dans lequel lesdites deuxièmes têtes de préhension (22) sont déplacées sur ledit deuxième élément de transport (21) de telle sorte que, sur au moins une partie dudit deuxième dispositif à carrousel (20), chaque rangée de ladite pluralité de rangées soit sensiblement parallèle à ladite deuxième trajectoire d'avance (B).

4. Appareil selon l'une quelconque des revendications précédentes, dans lequel ledit premier élément de transport (11) comprend un tambour qui tourne autour d'un premier axe de rotation principal (X), de préférence sensiblement vertical, et ladite première trajectoire d'avance (A) définit une circonférence.

5. Appareil selon l'une quelconque des revendications précédentes, dans lequel ledit deuxième élément de transport (21) comprend un tambour qui tourne autour d'un deuxième axe de rotation principal (Y), de préférence sensiblement vertical, et ladite deuxième trajectoire d'avance (B) définit une circonférence.

6. Appareil selon l'une quelconque des revendications précédentes, dans lequel chaque première tête de préhension (12) comprend une pluralité d'éléments de préhension (13), dont chacun est prévu pour retenir individuellement l'une desdites capsules (2).

7. Appareil selon la revendication 6, dans lequel lesdits éléments de préhension (13) comprennent un bras central (14) qui est monté de manière à être fixé sur ladite première tête de préhension (12) et une paire de bras latéraux (15, 16), lesdits bras latéraux (15, 16) étant montés sur ladite première tête de préhension (12) du côté opposé audit bras central (14) et étant articulés de manière à pivoter en s'éloignant et en se rapprochant dudit bras central afin de retenir ou de libérer lesdites capsules (2).

8. Appareil selon l'une quelconque des revendications précédentes, dans lequel lesdites deuxièmes têtes de préhension (22) comprennent un élément en forme de plateau (23), dans lequel est formée une pluralité de logements (24), chaque logement (24) étant destiné à recevoir une seule capsule (2) provenant de ladite première tête de préhension (12) de manière à la soutenir.

9. Appareil selon l'une quelconque des revendications précédentes, dans lequel ledit deuxième dispositif à carrousel (20) comprend un équipement d'entraînement desdites deuxièmes têtes de préhension (22) qui est prévu pour faire pivoter chaque deuxième tête de préhension (22) autour d'un axe de pivotement (Z) afin de disposer lesdites capsules (2) dans ladite configuration à plusieurs rangées.

10. Appareil selon la revendication 9, dans lequel ledit axe de pivotement (Z) est espacé par rapport à une ligne droite (R) qui relie lesdits logements (24) dudit élément en forme de plateau (23).

11. Procédé de déplacement d'articles (2) entre des dispositifs à carrousel d'un appareil destiné à la fabrication de capsules (2) pour boissons de type infusion, selon l'une quelconque des revendications précédentes, le procédé comprenant :
- la fourniture d'un premier dispositif à carrousel (10) comprenant un premier élément de transport (11) qui est mobile le long d'une première trajectoire d'avance (A) et une pluralité de premières têtes de préhension (12) qui sont montées avec une capacité à se déplacer sur ledit premier élément de transport (11),
- la fourniture d'un deuxième dispositif à carrousel (20) comprenant un deuxième élément de transport (21) qui est mobile le long d'une deuxième trajectoire d'avance (B) et une pluralité de deuxièmes têtes de préhension (22) qui sont montées avec une capacité à se déplacer sur ledit deuxième élément de transport (21),
- le déplacement, à l'aide dudit premier dispositif à carrousel (10), desdites capsules (2) qui sont retenues par lesdites premières têtes de préhension (12) dans une configuration à rangée unique, de sorte que lesdites capsules soient alignées en une unique rangée au cours de leur déplacement le long de ladite première trajectoire d'avance (A),
- le transfert desdites capsules (2) dudit premier dispositif à carrousel (10) vers ledit deuxième dispositif à carrousel (20) en faisant passer les capsules (2) de chaque première tête de préhension (12) vers une deuxième tête de préhension respective (22),
- le déplacement, au moyen dudit deuxième dispositif à carrousel (20), desdites capsules (2) reçues à partir desdites premières têtes de préhension (12) dans une configuration à plusieurs rangées, dans laquelle lesdites capsules (2) sont alignées en une pluralité de rangées qui sont décalées les unes par rapport aux autres au cours de leur déplacement le long de ladite deuxième trajectoire d'avance (B).

12. Procédé selon la revendication 11, dans lequel lesdites capsules (2) sont passées deux par deux depuis chaque première tête de préhension (12) vers une deuxième tête de préhension respective (22).

13. Appareil selon l'une quelconque des revendications 1 à 10, dans lequel ladite unité de déplacement (1) achemine des capsules vides (2) dudit premier dispositif à carrousel (10) vers ledit deuxième dispositif à carrousel (20) et ledit deuxième dispositif à carrousel (20) comprend au moins un dispositif destiné à remplir lesdites capsules vides avec un produit en poudre.

14. Appareil selon la revendication 13, dans lequel ledit au moins un dispositif de remplissage est monté sur ledit deuxième élément de transport (21) de manière à remplir lesdites capsules vides (2) pendant le déplacement dudit deuxième élément de transport (21) le long de ladite deuxième trajectoire d'avance (B).
